# FASCICULE DE BREVET EUROPEEN

(11) **EP 0 989 009 B1**
(45) Date de publication et mention de la délivrance du brevet: **26.01.2005**
(21) Numéro de dépôt: 99402180.6
(22) Date de dépôt: 03.09.1999
(51) Int. Cl.: B60J 7/047

(54) **Véhicule automobile comportant un pavillon escamotable dans une porte transversale arrière**
Kraftfahrzeug mit einem Dach, versenkbar in einer querliegenden Hecktür
Motor vehicle provided with a roof retractable in a transversal rear door

(30) Priorité: 25.09.1998 FR 9812048
(43) Date de publication de la demande: 29.03.2000
(73) Titulaire: Renault s.a.s., 92100 Boulogne Billancourt (FR)
(72) Inventeur: Mitu, Aurel, 95000 Cergy (FR); Urset, Charles, 95610 Eragny sur Oise (FR)

(56) Documents cités:
- EP-A- 0 101 322
- DE-A- 19 616 972
- FR-A- 2 744 957

## Description

L'invention concerne un véhicule automobile.

L'invention concerne plus particulièrement un véhicule automobile dont l'habitacle est délimité par au moins une porte agencée transversalement à l'arrière de la caisse du véhicule, du type dans lequel la porte arrière comporte un panneau inférieur surmonté d'une vitre supérieure et des moyens d'articulation du panneau inférieur par rapport à la caisse du véhicule qui permettent l'ouverture de la porte arrière, du type dans lequel au moins une partie du toit de l'habitacle est constituée d'un pavillon qui s'étend sensiblement horizontalement en avant de la vitre supérieure de la porte arrière et qui est formé d'une pluralité de lamelles transversales, notamment articulées les unes par rapport aux autres, qui sont susceptibles d'être entraînées notamment par une lamelle avant, pour coulisser longitudinalement, notamment vers l'arrière et découvrir au moins partiellement l'habitacle du véhicule, et qui sont susceptibles d'être reçues, notamment en se superposant les unes sur les autres, dans une cassette de rangement agencée en arrière du toit dans son prolongement.

DE-A-19616972 décrit un pavillon formé d'une pluralité de lamelles susceptibles d'être reçues entre la dernière rangé de siège et le bord de la partie arrière du véhicule.

On connaît de longue date des véhicules découvrables comportant un toit souple ou capote, qui est susceptible de couvrir le véhicule en s'étendant sur des armatures rigides articulées, et de découvrir le véhicule lorsque ces armatures sont escamotées vers une position de rangement.

L'inconvénient majeur de ce type de véhicule est d'une part la grande vulnérabilité de la capote aux dégradations diverses dont elle peut être l'objet, qu'elles soient d'origine naturelle ou humaine, et d'autre part le relatif inconfort d'un tel toit, et ce, particulièrement pour des grandes vitesses du véhicule dans lesquelles l'air parvient à s'infiltrer sous la capote et génère des bruits aérodynamiques gênant les passagers.

Pour remédier à cet inconvénient, on imaginé de remplacer la capote par un toit rigide démontable, aussi appelé "hard-top". Un tel toit présente des caractéristiques de rigidité et d'insonorisation satisfaisantes mais se révèle particulièrement encombrant une fois démonté. Si le hard-top est destiné à être rangé dans le véhicule, il ne peut l'être que dans le coffre à bagages, dont il réduit singulièrement la capacité.

Pour remédier à cet autre inconvénient, on a imaginé des véhicules comportant des toits rigides, dans lesquels une partie coulissante, appelée toit ouvrant, peut être escamotée.

L'inconvénient majeur de tels véhicules est essentiellement la dimension réduite de ces toits ouvrants, la partie coulissante devant nécessairement être rangée dans une partie du toit.

Par ailleurs, la modularité de tous ces véhicules se trouve limitée à celle du toit, mais n'est en aucun cas étendue à un quelconque autre élément de carrosserie.

Pour remédier à ces inconvénients, on a proposé un toit comportant un pavillon constitué d'une pluralité de lamelles rigides coulissantes, destinées à prendre place dans une cassette de rangement.

Le document FR-A-2.744.957 décrit un tel toit.

Il s'agit d'un toit constitué d'un pavillon réalisé sous la forme de lamelles intégrables dans un caisson et d'une lunette arrière escamotable. La lunette arrière est constituée d'un cadre mobile qui s'étend à proximité du bord de la partie arrière du véhicule jusqu'à la limite arrière du pavillon, dans une position de fermeture de l'habitacle, et à proximité arrière du véhicule jusqu'à l'arrière de la dernière rangée de sièges, dans une position escamotée sensiblement horizontale. Le cadre mobile coopère par sa partie inférieure avec des dispositifs de basculement de la lunette arrière, qui sont portés par la carrosserie du véhicule.

Un tel toit permet de découvrir une grande partie du toit du véhicule, tout en gardant au pavillon des caractéristiques de rigidité et d'insonorisation satisfaisantes. En revanche, l'ensemble constitué du caisson et de la lunette arrière occupe une partie importante du coffre du véhicule lorsque la lunette arrière est basculée.

Pour remédier à cet inconvénient, l'invention propose un véhicule de ce type dont tout ou partie du toit peut être escamoté de façon compacte.

Dans ce but, l'invention propose un véhicule automobile du type précédemment décrit, caractérisé en ce que la cassette de rangement est escamotable dans un logement du panneau inférieur de la porte arrière.

Selon d'autres caractéristiques de l'invention :
- le toit comporte une paire de premières glissières parallèles et opposées qui sont destinées à recevoir des doigts transversaux des lamelles et qui s'étendent longitudinalement dans l'épaisseur du toit pour guider les lamelles vers la cassette de rangement dans une position d'ouverture partielle de l'habitacle,
- le toit comporte une paire de deuxièmes glissières parallèles et opposées qui sont destinées à recevoir des doigts de la cassette de rangement et qui s'étendent jusqu'au panneau inférieur de la porte arrière pour guider longitudinalement et/ou verticalement la cassette de rangement vers le panneau inférieur, dans une position de pleine ouverture de l'habitacle,
- l'intérieur de la cassette de rangement comporte une paire de troisièmes glissières internes parallèles et opposées qui, dans la position d'ouverture partielle de l'habitacle prolongent les premières glissières pour le guidage des doigts des lamelles à l'intérieur de la cassette,
- l'intérieur du logement du panneau inférieur comporte une paire de quatrièmes glissières internes parallèles et opposées qui, lorsque la porte arrière est fermée, prolongent les deuxièmes glissières pour le guidage des doigts de la cassette de rangement à l'intérieur du logement du panneau inférieur,
- la vitre supérieure bloque longitudinalement la cassette de rangement dans la position d'ouverture partielle de l'habitacle, et son bord adjacent au panneau inférieur est articulé autour d'un axe transversal pour permettre à la vitre de basculer vers l'arrière et libérer la cassette de rangement pour le passage de la position d'ouverture partielle à la position de pleine ouverture de l'habitacle,
- les extrémités opposées de l'axe transversal d'articulation de la vitre supérieure sont reçues dans une cinquième paire de glissières parallèles et opposées qui s'étendent vers l'intérieur du logement du panneau inférieur pour permettre à la vitre supérieure de coulisser verticalement dans le logement du panneau inférieur,
- le panneau inférieur est porté par deux bras supérieurs sensiblement verticaux, qui sont agencés dans le prolongement de la caisse du véhicule de part et d'autre de la vitre supérieure, qui sont articulés à leurs extrémités supérieures par des pivots transversaux, et qui comportent les deuxièmes glissières,
- le panneau inférieur de la porte arrière est articulé par rapport à la caisse autour d'un axe transversal inférieur,
- les extrémités opposées de l'axe transversal inférieur sont reçues dans une sixième paire de glissières parallèles et opposées qui s'étendent longitudinalement à l'intérieur de l'habitacle, notamment le long d'un plancher du véhicule, pour permettre, une fois la vitre supérieure escamotée dans le logement du panneau inférieur, le rangement du panneau inférieur à l'intérieur de l'habitacle,
- le panneau inférieur de la porte arrière est articulé par rapport à la caisse autour d'un axe vertical agencé le long d'un bord latéral du panneau,
- la paire de cinquième glissières comporte dans sa partie supérieure un décrochement permettant le guidage en rotation de l'axe transversal d'articulation de la vitre supérieure de façon à permettre de rabattre la vitre arrière vers l'intérieur dans un plan horizontal,
- les deuxièmes glissières comportent un aiguillage dont une branche s'étend verticalement à l'aplomb du raccordement entre la vitre supérieure et le pavillon, pour permettre de coucher la cassette de rangement vers l'intérieur dans un plan horizontal au droit du raccordement entre la vitre supérieure et le panneau inférieur,
- le véhicule automobile comporte des moyens motorisés pour assurer le coulissement des lamelles, de la vitre supérieure et du panneau inférieur,
- le véhicule automobile comporte une cassette supplémentaire fixe de rangement qui est agencée à l'avant du toit du véhicule, et
- le pavillon s'étend sur toute la longueur du toit.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un véhicule automobile selon l'invention représenté selon une configuration dans laquelle les lamelles coulissantes ferment l'habitacle ;
- la figure 2 est une vue selon la figure 1 représentant le véhicule automobile dans une configuration dans laquelle les lamelles sont reçues dans la cassette de rangement en position d'ouverture partielle de l'habitacle ;
- la figure 3 est une vue selon la figure 1 représentant le véhicule automobile en position d'ouverture partielle de l'habitacle, la vitre supérieure de la porte arrière étant rangée dans le panneau inférieur ;
- la figure 4 est une vue selon la figure 1 représentant le véhicule automobile en position de pleine ouverture de l'habitacle, la vitre supérieure de la porte arrière et la cassette de rangement étant rangées dans le panneau inférieur de la porte arrière ;
- la figure 5 est une vue schématique en coupe longitudinale illustrant les différentes positions de la cassette et de la vitre supérieure de la porte arrière ;
- la figure 6 est une vue selon la figure 1 représentant un véhicule automobile selon un premier mode de réalisation de l'invention qui comporte une panneau inférieur de porte arrière porté par deux bras supérieurs verticaux ;
- la figure 7 est une vue en coupe longitudinale du véhicule selon la figure 6 ;
- la figure 8 est une vue selon la figure 1 représentant un véhicule automobile selon un deuxième mode de réalisation de l'invention dont la porte arrière comporte un panneau inférieur articulé par rapport à la caisse autour d'un axe vertical latéral ;
- la figure 9 est une vue selon la figure 1 représentant un véhicule automobile selon un troisième mode de réalisation de l'invention dont la porte arrière comporte un panneau inférieur articulé par rapport à la caisse autour d'un axe transversal inférieur ;
- la figure 10 est une vue selon la figure 9 représentant le panneau inférieur de la porte arrière rangé à l'intérieur de l'habitacle ;
- les figures 11 à 14 sont des vues schématiques en coupe longitudinale illustrant les coulissements respectifs de la vitre supérieure, de la cassette de rangement, et du panneau inférieur de la porte arrière, conformément au troisième mode de réalisation de l'invention ;
- la figure 15 est une vue schématique en coupe longitudinale d'un mode de réalisation en variante pour le rangement couché de la cassette de rangement et de la vitre supérieure de la porte arrière, conformément aux trois premiers modes de réalisation de l'invention ; et
- la figure 16 est une vue en perspective selon la figure 15.

Dans la description qui va suivre, des chiffres de référence identiques désignent des pièces identiques ou ayant des fonctions similaires.

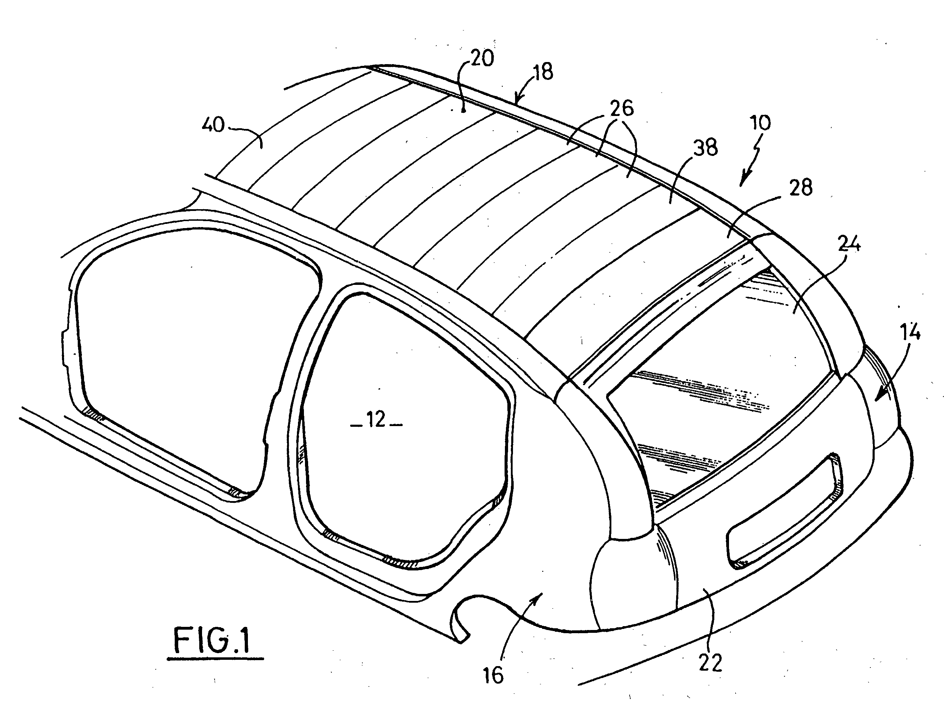

On voit sur la figure 1 une vue en perspective d'un véhicule 10 réalisé conformément à l'invention.

De manière connue, le véhicule 10 comporte un habitacle 12 qui est délimité par une porte 14 agencée transversalement à l'arrière de la caisse 16 du véhicule 10.

Le véhicule 10 comporte un toit 18 dont un pavillon 20 s'étend horizontalement en avant de la porte arrière 14.

La porte 14 est constituée d'un panneau inférieur 22 et d'une vitre supérieure 24 qui sont, comme on le verra ultérieurement, articulés par rapport à la caisse 16 du véhicule 10.

De manière connue, le pavillon 20 est formé d'une pluralité de lamelles transversales 26, formant un rideau ou panneau escamotable, qui sont articulées les unes par rapport aux autres et sont susceptibles de coulisser longitudinalement pour, comme il sera décrit ultérieurement, découvrir partiellement ou totalement le véhicule 10.

Dans la configuration de la figure 1, les lamelles 26 occupent une position de fermeture de l'habitacle et s'étendent sur toute la longueur du pavillon 20 du véhicule.

De manière connue, une cassette de rangement 28 est agencée à l'arrière du pavillon 20 du toit 18 dans le prolongement exact des lamelles transversales 26. Ainsi, la cassette de rangement 28 et les lamelles 26 sont pratiquement de même largeur et affleurent à la surface du toit 18. La cassette de rangement est creuse et est destinée à recevoir les lamelles transversales 26 en rangement superposé en vue de l'ouverture de l'habitacle 12. Le détail du rangement des lamelles transversales 26 dans la cassette de rangement 28 sera décrit ultérieurement.

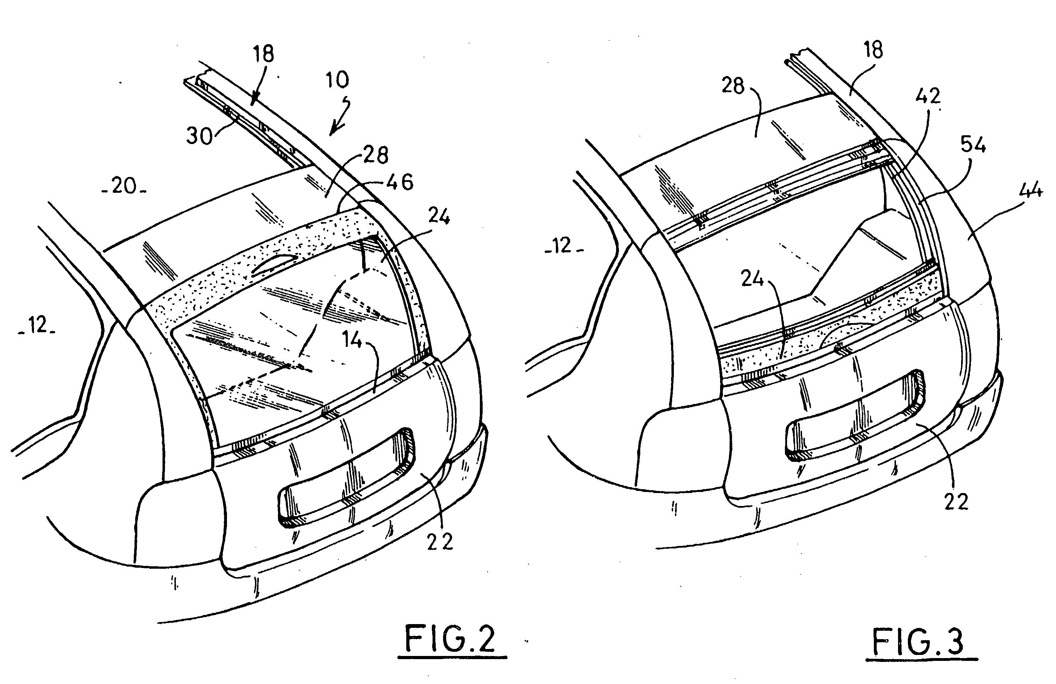

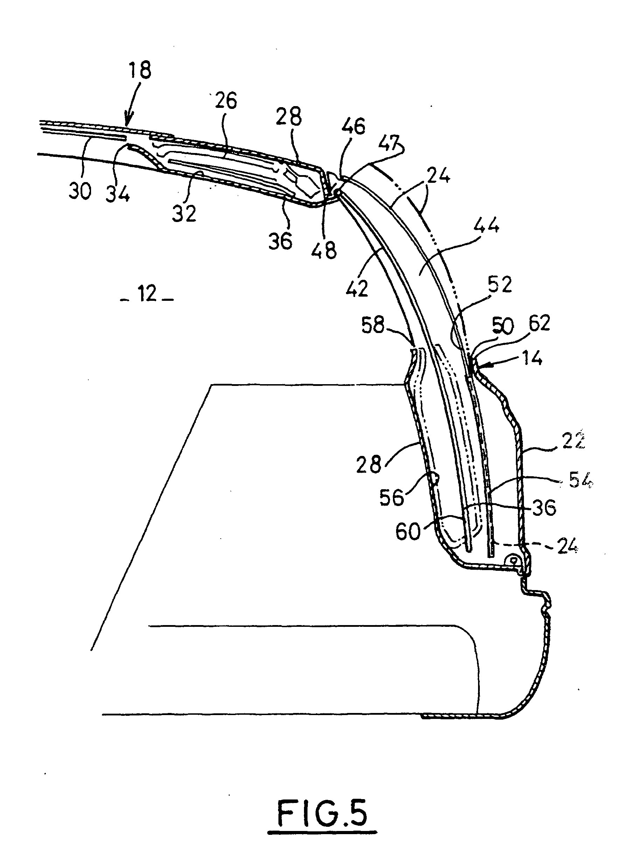

La vue de la figure 2 illustre une configuration d'ouverture partielle de l'habitacle 12 dans laquelle les lamelles 26 ont coulissé le long d'une première paire de glissières parallèles 30 dans la cassette de rangement 28 afin d'occuper une position de rangement dans laquelle elles se superposent les unes sur les autres. Cette position de rangement des lamelles 26 est illustrée en référence à la figure 5.

La cassette de rangement 28 est creuse, sensiblement parallélépipédique et comporte un logement 32 qui est destiné à recevoir en superposition les lamelles transversales 26. Lors de l'ouverture partielle de l'habitacle 12, les lamelles transversales 26 coulissent le long de la paire de premières glissières 30 et pénètrent dans le logement 32 de la cassette de rangement 28 par une ouverture 34 tournée vers l'avant du véhicule.

Le logement 32 comporte intérieurement une paire de troisièmes glissières parallèles internes 36 qui, dans la position de la cassette de rangement 28 illustrée à la figure 2, prolongent la paire de première glissières 30 afin de guider les lamelles transversales 26 jusqu'à leur position de rangement. En effet, les troisièmes glissières internes 36 sont incurvées vers le bas de sorte que, lorsque les lamelles transversales 26 pénètrent dans le logement 32 de la cassette de rangement 28, une lamelle transversale arrière 38, représentée à la figure 1, pénètre en premier dans le logement 32 de la cassette de rangement 28 et vient reposer au fond de ce logement 32. Par la suite, la lamelle transversale 26 suivante glisse sur la lamelle arrière 38. Il en est de même de toutes les lamelles transversales 26 suivantes qui s'empilent les unes sur les autres au fur et à mesure de la progression du rideau de lamelles 26 vers l'arrière du toit 18.

Avantageusement, le coulissement des lamelles transversales 26 est motorisé, par exemple par l'intermédiaire de moyens électriques (non représentés) qui agissent sur une lamelle avant 40, représentée à la figure 1, la lamelle avant 40 poussant donc toutes les lamelles 26 et la lamelle 38 arrière vers la cassette de rangement.

Cette configuration n'est pas limitative de l'invention, et les lamelles 40, 26 et 38 peuvent être actionnées manuellement, de même que les lamelles transversales 26 peuvent en variante être tirées par la lamelle arrière 38 et non poussées par la lamelle avant 40.

Comme on le voit sur les figures 3 à 5, la cassette de rangement 28 est susceptible de coulisser longitudinalement sur une paire de deuxièmes glissières parallèles 42 qui s'étendent à l'intérieur de l'habitacle 12 du véhicule de part et d'autre de montants arrière 44 du véhicule pour guider la cassette de rangement 28 vers une position escamotée dans le panneau inférieur 22 de la porte arrière 14 du véhicule. La cassette 28 peut ainsi coulisser de haut en bas, de l'arrière du toit 18 au panneau inférieur 22, afin d'amener l'habitacle 12 du véhicule dans une position de pleine ouverture.

Initialement, après que les lamelles transversales 26 aient été escamotées par empilement les unes sur les autres dans la cassette de rangement 28 comme décrit en référence à la figure 2, la cassette de rangement 28 est immobilisée dans ses déplacements longitudinaux par la vitre supérieure 24 de la porte arrière 14 dont l'extrémité supérieure 46 est en appui sur un patin arrière 48, visible à la figure 5, qui est solidaire de la cassette de rangement 28 pour son immobilisation.

On voit sur la figure 5 que la vitre supérieure 24, représentée en trait fort en position de fermeture, exerce par l'intermédiaire de son extrémité supérieure 46 un effort tourné sensiblement vers le bas et vers l'avant du véhicule sur le patin 48, lequel effort maintient la cassette de rangement 28 à l'extrémité supérieure de la paire de deuxièmes glissières 42. En effet, des doigts transversaux 47 de guidage de la cassette de rangement 28, qui sont reçus dans les glissières 42, sont alors en butée contre les extrémités supérieures des deuxièmes glissières 42.

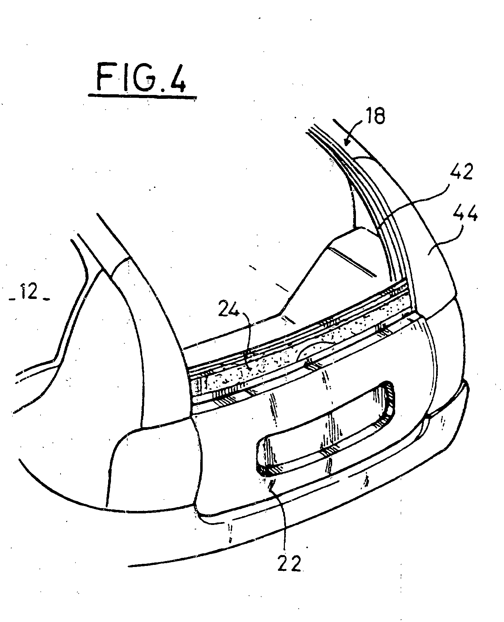

Lorsque l'on désire obtenir une position de pleine ouverture de l'habitacle 12 comme représenté à la figure 4, la vitre supérieure 24, comme représentée en trait mixte à la figure 5, pivote autour d'un axe transversal 50 qui est agencé au bord inférieur 52 de la vitre supérieure 24 qui est adjacent au panneau inférieur 22. L'extrémité supérieure 46 de la vitre supérieure 24 bascule donc autour de l'axe transversal 50 vers l'arrière du véhicule et libère le patin 48 de sorte que la cassette de rangement 28 n'est plus immobilisée et est donc à même de coulisser du haut vers le bas le long de la paire de troisièmes glissières 42 vers le panneau inférieur 22, comme on l'a représenté à la figure 4.

Les figures 4 et 5 illustrent l'étape suivante permettant de découvrir le véhicule 10. La vitre supérieure 24 ayant été basculée autour de l'axe transversal 50 conformément à la figure 5, la cassette de rangement 28 descend le long des glissières 42 dans un logement 56 du panneau inférieur 22, comme l'illustre son profil en pointillés à la figure 5. Le logement 56 comporte à cet effet une ouverture supérieure 56 permettant de laisser le passage à la cassette de rangement 28.

Avantageusement, par sécurité et de façon non limitative de l'invention, la vitre supérieure 24 peut rester levée ou sortie pendant la descente de la cassette de rangement 28, afin de former protection contre le cisaillement d'un corps étranger éventuel. Toutefois, comme l'illustre la figure 3, la vitre supérieure 24 peut aussi être reçue dans le logement 56 du panneau inférieur 22 sans que la cassette de rangement 28 soit descendue, ou avant que la cassette de rangement 28 ne soit descendue.

Puis, comme l'illustre la figure 4, la vitre supérieure 24 est descendue à son tour dans le logement 56 du panneau inférieur 22. Pour ce faire, l'axe transversal 50 d'articulation de la vitre supérieure 24 comporte deux doigts transversaux (non représentés) qui sont reçus dans une paire de cinquièmes glissières parallèles 54, visibles à la figure 5, qui sont agencées sur les montants 44 décrits en référence à la figure 5 et qui se prolongent dans le logement 56 du panneau inférieur 22.

Cette configuration de pleine ouverture de l'habitacle est décrite en référence à la figure 4, dans laquelle la cassette de rangement 28 a coulissé de haut en bas le long de la paire de deuxièmes glissières 42 agencée sur les montants 44, et le long d'une paire de quatrièmes glissières 60, qui prolongent les deuxièmes glissières 42 à l'intérieur du logement 56. Ces glissières 60 sont représentées à la figure 5.

Comme l'illustre la figure 5, la position de la vitre supérieure 24 est ainsi définie par le profil en pointillé dans le logement 56.

Ainsi, avantageusement, lorsque la cassette de rangement 28 et la vitre supérieure 24 sont escamotées dans le logement 56 du panneau inférieur 22 de la porte 14, l'habitacle 12 du véhicule est entièrement découvert de l'avant du pavillon jusqu'au bord supérieur 62 du panneau inférieur 22 de la porte arrière 14.

Conformément à l'invention, la porte arrière 14 peut présenter différents modes de réalisation de ses moyens d'articulation par rapport à la caisse 16 du véhicule.

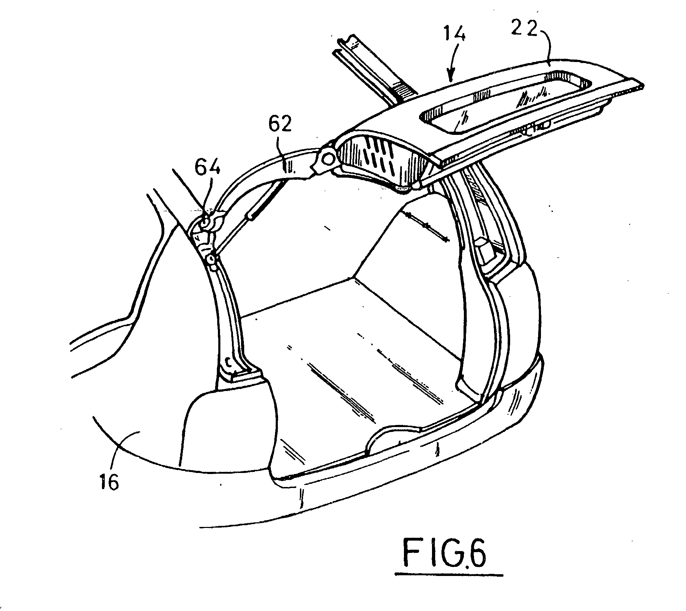

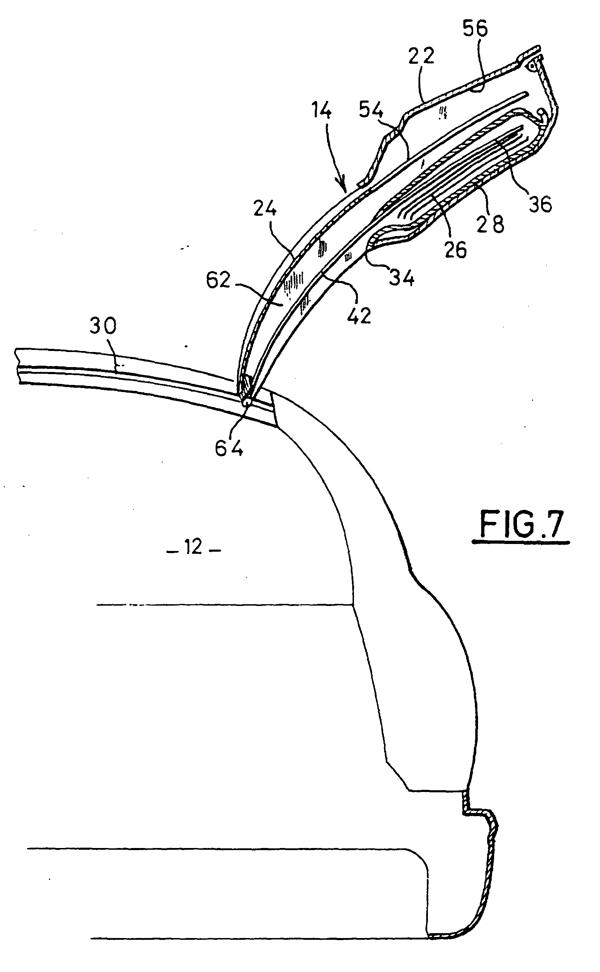

Dans un premier mode de réalisation de l'invention représenté aux figure 6 et 7, le panneau inférieur 22 de la porte arrière 14 est porté par deux bras supérieurs 62 sensiblement longitudinaux et globalement verticaux, qui sont agencés dans le prolongement de la caisse 16 du véhicule, de part et d'autre de la vitre supérieure 24 précédemment décrite et qui sont articulés à leurs extrémités supérieures par des pivots transversaux 64 de façon à permettre une ouverture de la porte arrière transversale 14 à la manière d'un hayon conventionnel. Avantageusement, dans ce premier mode de réalisation, les bras supérieurs 62 comportent les deuxièmes glissières 42 qui permettent le coulissement de la cassette de rangement 28 vers le logement 56 du panneau inférieur 22.

Avantageusement, dans ce premier mode de réalisation, la porte arrière 14 peut être ouverte indifféremment selon que la cassette de rangement 28 et la vitre supérieure 24 sont ou non reçues dans le logement 56 du panneau inférieur 22.

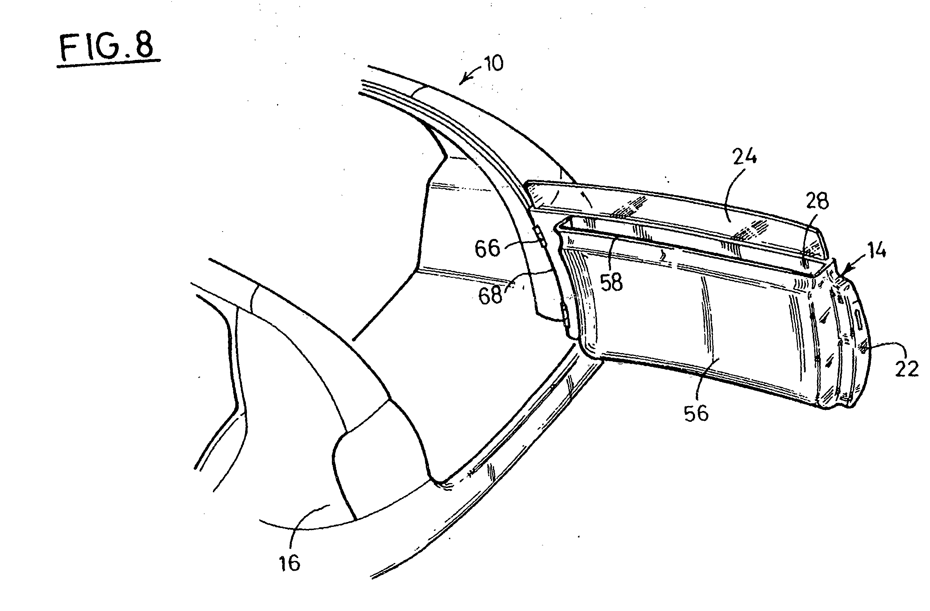

La figure 8 illustre un second mode de réalisation de l'invention dans lequel le panneau inférieur 22 de la porte arrière 14 est articulé par rapport à la caisse 16 du véhicule 10 autour d'un axe vertical réalisé à l'aide de pivots verticaux 66 qui sont agencés le long d'un bord latéral 68 du panneau inférieur 22. La vitre supérieure 24 et la cassette de rangement 28 sont représentées ici escamotées dans le logement 56 du panneau inférieur 22 et l'ouverture de la porte arrière 14 permet de dégager un grand seuil de chargement du véhicule 10, tout en occupant un encombrement restreint en hauteur par rapport au véhicule 10.

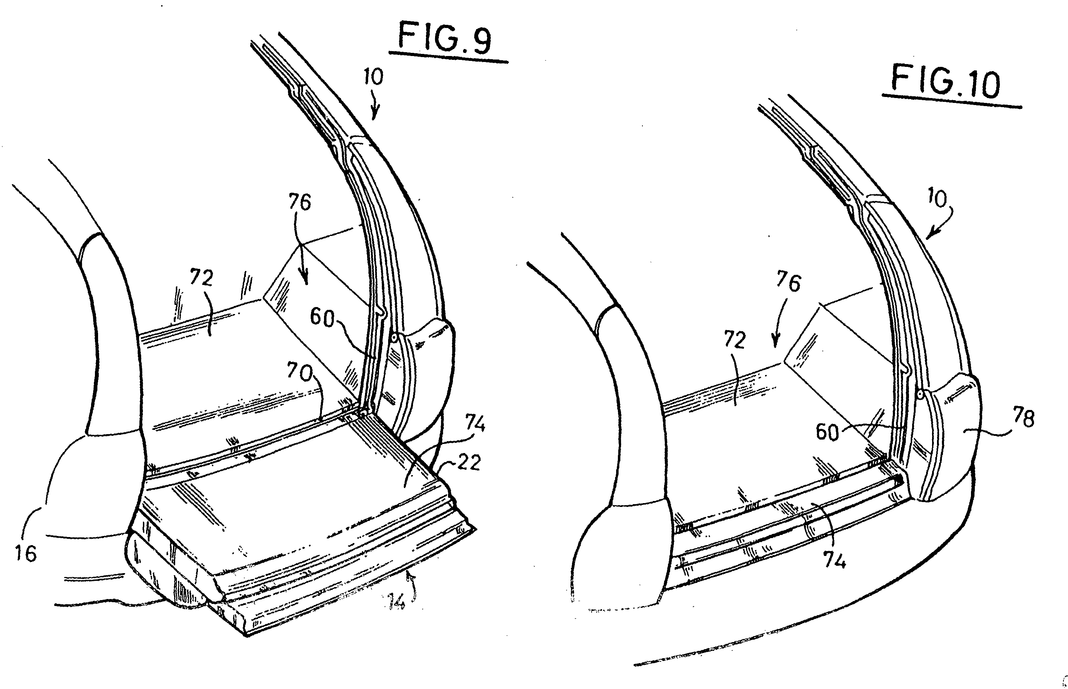

Les figures 9 à 14 illustrent un troisième mode de réalisation de l'invention dans lequel le panneau inférieur 22 de la porte transversale arrière 14 est articulé par rapport à la caisse 16 du véhicule 10 autour d'un axe transversal inférieur 70. Dans ce troisième mode de réalisation, le panneau inférieur 22 peut être rabattu horizontalement par rapport à la caisse 16 du véhicule dans le prolongement d'un plancher 72 du véhicule de façon à permettre le chargement d'objets encombrants que l'on vient par exemple faire reposer sur une face intérieure 74 du panneau inférieur 22 puis faire coulisser d'arrière en avant dans un coffre 76 du véhicule 10.

Dans cette configuration, le panneau inférieur 22 de la porte arrière 14 du véhicule ne peut être rabattu horizontalement que lorsque la vitre arrière 24 est reçue dans le logement 56 du panneau inférieur 22 précédemment décrit. En revanche, la cassette de rangement 28 peut ou non être escamotée dans le logement 56. Cette possibilité n'est pas représentée, mais des moyens de blocage supplémentaires (non représentés) peuvent alors permettre de maintenir la cassette de rangement 28 dans sa position d'ouverture partielle de l'habitacle défini en référence à la figure 3.

Comme l'illustre la figure 10, le panneau inférieur 22 peut alors être intégralement escamoté dans le coffre 76 du véhicule de façon à fournir un seuil de chargement plat sans qu'une quelconque partie saillante ne dépasse de l'arrière 78 du véhicule. En effet, dans cette configuration, le panneau inférieur 22 peut être escamoté sous le plancher 72 du véhicule.

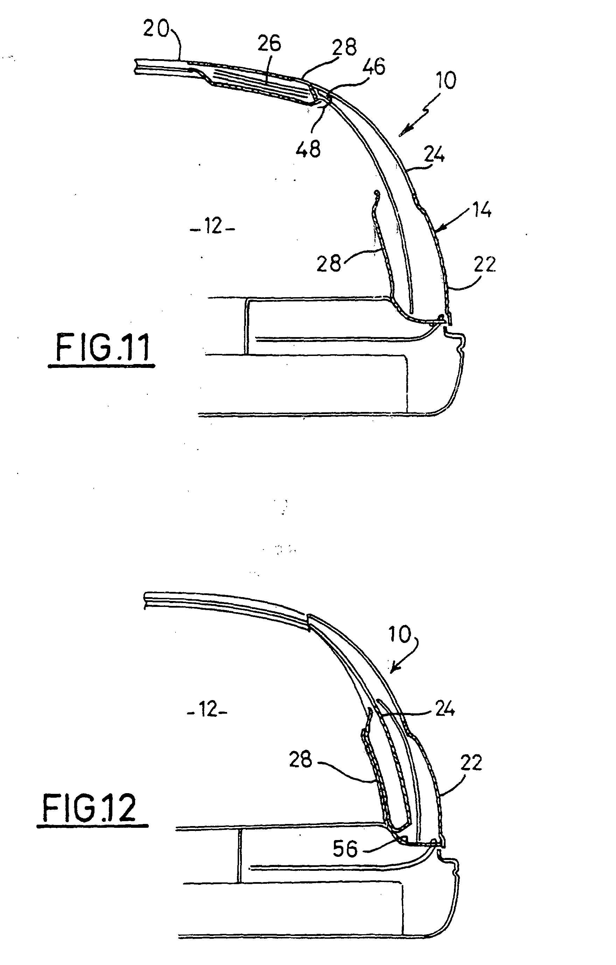

Les figures 11 à 14 illustrent les différentes positions d'ouverture de l'habitacle 12 du véhicule correspondant à ce troisième mode de réalisation.

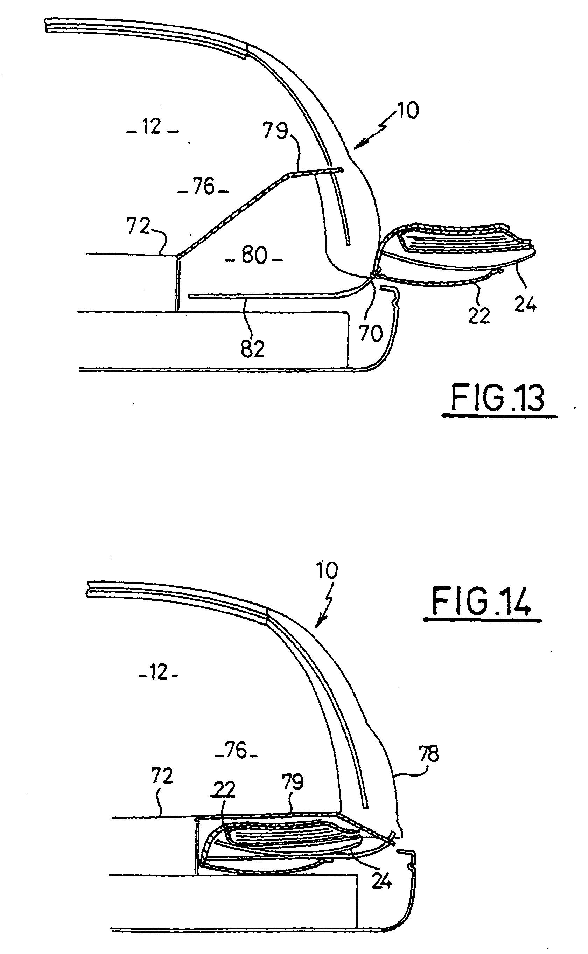

Comme il est représenté à la figure 11, dans la position d'ouverture partielle de l'habitacle, la cassette 28 portant les lamelles 26 est maintenue à l'arrière du pavillon 20 du véhicule par la vitre supérieure 24 dont l'extrémité supérieure 46 est en appui sur le patin 48 de la cassette de rangement 28. Dans cette configuration, le panneau inférieur 22 de la porte arrière 14 est fermé. Puis, comme l'illustre la figure 12, la cassette de rangement 28 et la vitre supérieure 24 sont reçues dans le logement 56 du panneau inférieur 22 et la vitre supérieure 24 est descendue dans ce même logement 56. Le panneau inférieur 22 de la porte arrière 14 peut alors être rabattu horizontalement conformément à la figure 13, de façon à permettre l'accès au coffre 76 du véhicule. Lorsque l'on désire escamoter le panneau inférieur 22 à l'intérieur du coffre 76 du véhicule, l'utilisateur du véhicule 10 soulève un panneau de protection 79 appartenant au plancher 72 du véhicule et qui découvre un logement 80 dans lequel le panneau inférieur 22 peut être escamoté. Pour ce faire, l'axe transversal inférieur 70 d'articulation du panneau inférieur 22, précédemment décrit en référence à la figure 9, comporte des doigts transversaux (non représentés) à ses extrémités qui sont reçus dans une paire de sixièmes glissières parallèles 82 qui s'étendent longitudinalement et horizontalement à l'intérieur du logement 80 de l'habitacle 12, pour permettre le coulissement longitudinal du panneau inférieur 22. Cette configuration est représentée aux figures 10 et 14 dans lesquelles le véhicule 10 est entièrement découvert de l'avant (non représenté) du toit 18 jusqu'au seuil du coffre 76. Avantageusement, cette configuration permet, par exemple, le transport d'objects encombrants agencés longitudinalement et pouvant faire saillie à l'arrière 78 du véhicule, tels que des planches à voile ou toutes sortes d'objets de grande longueur.

On remarquera que le panneau de protection 79 est avantageusement situé dans le prolongement du plancher 72 du véhicule 10 de manière à offrir un seuil de chargement rigoureusement plat.

Avantageusement, en variante, un logement pour une roue de secours peut être prévu au fond du logement 80, en dessous de l'emplacement dévolu au panneau inférieur 22.

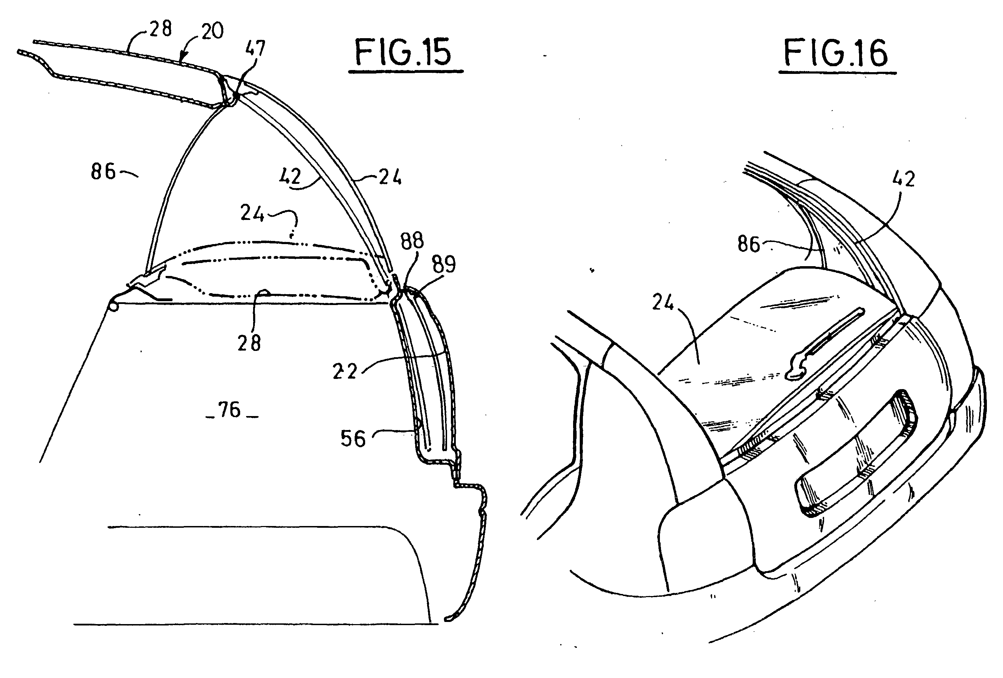

Les figures 15 et 16 illustrent un quatrième mode de réalisation de l'invention dans lequel la cassette de rangement peut sélectivement être rangée ou non dans le logement 56 du panneau inférieur 22. En effet, dans cette configuration, les deuxièmes glissières 42 comportent un aiguillage 84 dont une branche 86 s'étend verticalement à l'aplomb du raccordement entre la vitre supérieure 24 et le pavillon 20 pour permettre à la cassette de rangement 28 d'être rabattue horizontalement au droit du raccordement entre la vitre supérieure 24 et le panneau inférieur 22.

Dans ce cas, la cassette de rangement pivote autour de ses doigts transversaux 47. L'utilisateur peut donc avantageusement choisir d'escamoter la cassette de rangement 28 dans le logement 56 du panneau inférieur 22 ou de rabattre la cassette de rangement 28 pour fermer le coffre 76 du véhicule et soustraire son contenu à la vue depuis l'extérieur du véhicule. D'une manière analogue, la paire de cinquièmes glissières 54 de la vitre supérieure 24 comporte à son extrémité supérieure 88 un décrochement 89 qui permet de basculer la vitre supérieure 24 horizontalement au droit du raccordement entre la vitre supérieure 24 et le panneau inférieur 22 de façon à ce qu'elle vienne couvrir la cassette de rangement 28. Cette configuration est représentée en référence à la figure 16 dans laquelle la vitre supérieure 24 s'étend horizontalement au dessus de la cassette de rangement (non représentée) afin par exemple de la protéger des poussières. Avantageusement, la vitre supérieure 24 peut elle aussi être escamotée ou non dans le panneau inférieur 22.

Ce quatrième mode de réalisation est aussi avantageusement compatible avec chacun des trois modes de réalisation précédents, ce qui permet une grande modularité de l'habitacle 12 du véhicule.

Pour tous les modes de réalisation, on notera qu'une cassette de rangement supplémentaire fixe (non représentée) peut être agencée à l'avant du toit 18 du véhicule 10 pour recevoir en rangement les lamelles transversales 26 après un coulissement de l'arrière vers l'avant, ce qui permet avantageusement de découvrir selon les préférences des utilisateurs le véhicule par l'avant ou par l'arrière.

L'invention permet donc de disposer d'un véhicule 10 de grande modularité, disposant d'un pavillon 20 rigide mais escamotable, réalisé avec des moyens simples et fiables.

## Revendications

1. Véhicule automobile (10) dont l'habitacle (12) est délimité par au moins une porte (14) agencée transversalement à l'arrière de la caisse (16) du véhicule (10), du type dans lequel la porte arrière (14) comporte un panneau inférieur (22) surmonté d'une vitre supérieure (24) et des moyens d'articulation du panneau inférieur (22) par rapport à la caisse (16) du véhicule qui permettent l'ouverture de la porte arrière (14), du type dans lequel au moins une partie du toit (18) de l'habitacle est constituée d'un pavillon (20) qui s'étend sensiblement horizontalement en avant de la vitre supérieure (24) de la porte arrière (14) et qui est formé d'une pluralité de lamelles (26) transversales, notamment articulées les unes par rapport aux autres, qui sont susceptibles d'être entraînées notamment par une lamelle avant (40), pour coulisser longitudinalement, notamment vers l'arrière et découvrir au moins partiellement l'habitacle (12) du véhicule (10), et qui sont susceptibles d'être reçues, notamment en se superposant les unes sur les autres, dans une cassette de rangement (28) agencée en arrière du toit (18) dans son prolongement, **caractérisé en ce que** la cassette de rangement (28) est escamotable dans un logement (56) du panneau inférieur (22) de la porte arrière (14).

2. Véhicule automobile (10) selon la revendication 1, **caractérisé en ce que** le toit (18) comporte une paire de premières glissières (30) parallèles et opposées qui sont destinées à recevoir des doigts transversaux des lamelles (26) et qui s'étendent longitudinalement dans l'épaisseur du toit (18) pour guider les lamelles (26) vers la cassette de rangement (28) dans une position d'ouverture partielle de l'habitacle (12).

3. Véhicule automobile (10) selon la revendication 2, **caractérisé en ce que** le toit (18) comporte une paire de deuxièmes glissières (42) parallèles et opposées qui sont destinées à recevoir des doigts (47) de la cassette de rangement (28) et qui s'étendent jusqu'au panneau inférieur (22) de la porte arrière (14) pour guider longitudinalement et/ou verticalement la cassette de rangement (28) vers le panneau inférieur (22), dans une position de pleine ouverture de l'habitacle (12)

4. Véhicule automobile (10) selon l'une quelconque des revendications 2 ou 3, **caractérisé en ce que** l'intérieur (56) de la cassette de rangement (28) comporte une paire de troisièmes glissières (36) internes parallèles et opposées qui, dans la position d'ouverture partielle de l'habitacle (12) prolongent les premières glissières (30) pour le guidage des doigts des lamelles (26) à l'intérieur de la cassette (28).

5. Véhicule automobile (10) selon l'une quelconque des revendications 3 ou 4, **caractérisé en ce que** l'intérieur du logement (52) du panneau inférieur (22) comporte une paire de quatrièmes glissières internes (60) parallèles et opposées qui, lorsque la porte arrière (22) est fermée, prolongent les deuxièmes glissières (42) pour le guidage des doigts (47) de la cassette de rangement (28) à l'intérieur du logement (56) du panneau inférieur (22).

6. Véhicule automobile (10) selon l'une quelconque des revendications précédentes, **caractérisé en ce que** la vitre supérieure (22) bloque longitudinalement la cassette de rangement (28) dans la position d'ouverture partielle de l'habitacle (12), et **en ce que** son bord adjacent (52) au panneau inférieur est articulé autour d'un axe transversal (50) pour permettre à la vitre (24) de basculer vers l'arrière et libérer la cassette de rangement (28) pour le passage de la position d'ouverture partielle à la position de pleine ouverture de l'habitacle (12).

7. Véhicule automobile (10) selon la revendication 6, **caractérisé en ce que** les extrémités opposées de l'axe transversal (50) d'articulation de la vitre supérieure (24) sont reçues dans une cinquième paire (54) de glissières parallèles et opposées qui s'étendent vers l'intérieur du logement (56) du panneau inférieur (22) pour permettre à la vitre supérieure (24) de coulisser verticalement dans le logement (56) du panneau inférieur (22).

8. Véhicule automobile (10) selon la revendication 7, **caractérisé en ce que** le panneau inférieur (22) est porté par deux bras supérieurs (62) sensiblement verticaux, qui sont agencés dans le prolongement de la caisse (16) du véhicule (10) de part et d'autre de la vitre supérieure (24), qui sont articulés à leurs extrémités supérieures par des pivots (64) transversaux, et qui comportent les deuxièmes glissières (42).

9. Véhicule automobile (10) selon la revendication 7, **caractérisé en ce que** le panneau inférieur (22) de la porte arrière (14) est articulé par rapport à la caisse (16) autour d'un axe transversal inférieur (70).

10. Véhicule automobile (10) selon la revendication 9, **caractérisé en ce que** les extrémités opposées de l'axe transversal inférieur (70) sont reçues dans une sixième paire de glissières (82) parallèles et opposées qui s'étendent longitudinalement à l'intérieur de l'habitacle (12), notamment le long d'un plancher (72) du véhicule, pour permettre, une fois la vitre supérieure escamotée (24) dans le logement (56) du panneau inférieur (22), le rangement du panneau inférieur (22) à l'intérieur de l'habitacle (12).

11. Véhicule automobile (10) selon la revendication 7, **caractérisé en ce que** le panneau inférieur (22) de la porte arrière (14) est articulé par rapport à la caisse (16) autour d'un axe vertical (66) agencé le long d'un bord latéral (68) du panneau (22).

12. Véhicule automobile (10) selon l'une quelconque des revendications 8 à 11, **caractérisé en ce que** la paire de cinquième glissières (54) comporte dans sa partie supérieure (88) un décrochement (89) permettant le guidage en rotation de l'axe transversal d'articulation (50) de la vitre supérieure (24) de façon à permettre de rabattre la vitre arrière (24) vers l'intérieur dans un plan horizontal.

13. Véhicule automobile (10) selon l'une quelconque des revendications précédentes, **caractérisé en ce que** les deuxièmes glissières (42) comportent un aiguillage dont une branche (86) s'étend verticalement à l'aplomb du raccordement entre la vitre supérieure (24) et le pavillon (20), pour permettre de coucher la cassette de rangement (28) vers l'intérieur dans un plan horizontal au droit du raccordement entre la vitre supérieure (24) et le panneau inférieur (22).

14. Véhicule automobile (10) selon l'une quelconque des revendications précédentes, **caractérisé en ce qu'**il comporte des moyens motorisés pour assurer le coulissement des lamelles (26,38,40), de la vitre supérieure (24) et du panneau inférieur (22).

15. Véhicule automobile (10) selon l'une quelconque des revendications précédentes, **caractérisé en ce qu'**il comporte une cassette supplémentaire fixe de rangement qui est agencée à l'avant du toit (18) du véhicule (10).

16. Véhicule automobile selon l'une quelconque des revendications précédentes, **caractérisé en ce que** le pavillon s'étend sur toute la longueur du toit.

## Claims

1. A motor vehicle (10) of which the passenger compartment (12) is delimited by at least one door (14) arranged transversely at the rear of the body (16) of the vehicle (10), of the type in which the rear door (14) comprises a lower panel (22) surmounted by an upper window (24) and means for pivotal mounting of the lower panel (22) with respect to the body (16) of the vehicle, which means permit opening of the rear door (14), of the type in which at least a part of a roof (18) of the passenger compartment is formed by an openable roof head (20) which extends substantially horizontally in front of the upper window (24) of the rear door (14) and which is formed by a plurality of transverse slats (26) which in particular are pivotably connected relative to each other and which are capable of being entrained, in particular by a front slat (40), to slide longitudinally, in particular towards the rear, and uncover at least partially the passenger compartment (12) of the vehicle (10) and which are capable of being received, in particular in mutually superposed relationship, in a storage casing (28) arranged at the rear of the roof (18) in the prolongation thereof, **characterised in that** the storage casing (28) is retractable into a housing (56) of the lower panel (22) of the rear door (14).

2. A motor vehicle (10) according to claim 1 **characterised in that** the roof (18) comprises a pair of first parallel and opposite slideways (30) which are intended to receive transverse fingers on the slats (26) and which extend longitudinally in the thickness of the roof (18) to guide the slats (26) towards the storage casing (28) in a position of partial opening of the passenger compartment (12).

3. A motor vehicle (10) according to claim 2 **characterised in that** the roof (18) comprises a pair of second parallel and opposite slideways (42) which are intended to receive fingers (47) of the stowage casing (28) and which extend to the lower panel (22) of the rear door (14) for guiding longitudinally and/or vertically the stowage casing (28) towards the lower panel (22) in a position of full opening of the passenger compartment (12).

4. A motor vehicle (10) according to either one of claims 2 and 3 **characterised in that** the interior (56) of the stowage casing (28) comprises a pair of third internal parallel and opposite slideways (36) which in the position of partial opening of the passenger compartment (12) prolong the first slideways (30) for guiding the fingers of the slats (26) in the interior of the casing (28).

5. A motor vehicle (10) according to either one of claims 3 and 4 **characterised in that** the interior of the casing (52) of the lower panel (22) comprises a pair of fourth internal parallel and opposite slideways (60) which, when the rear door (22) is closed, prolong the second slideways (42) for guiding the fingers (47) of the stowage casing (28) in the interior of the housing (56) of the lower panel (22).

6. A motor vehicle (10) according to any one of the preceding claims **characterised in that** the upper window (22) longitudinally blocks the stowage casing (28) in the position of partial opening of the passenger compartment (12) and that its edge (52) adjacent to the lower panel is pivoted about a transverse axis (50) to permit the window (24) to pivot rearwardly and free the stowage casing (28) for movement from the position of partial opening to the position of full opening of the passenger compartment (12).

7. A motor vehicle (10) according to claim 6 **characterised in that** the opposite ends of the transverse spindle (50) for pivotal mounting of the upper window (24) are received in a fifth pair (54) of parallel and opposite slideways which extend towards the interior of the housing (56) of the lower panel (22) to permit the upper window (24) to slide vertically into the housing (56) of the lower panel (22).

8. A motor vehicle (10) according to claim 7 **characterised in that** the lower panel (22) is carried by two substantially vertical upper arms (62) which are arranged in the prolongation of the body (16) of the vehicle (10) on respective sides of the upper window (24), which are pivotably mounted at their upper ends by transverse pivots (64) and which comprise the second slideways (42).

9. A motor vehicle (10) according to claim 7 **characterised in that** the lower panel (22) of the rear door is pivoted with respect to the body (16) about a lower transverse spindle (70).

10. A motor vehicle (10) according to claim 9 **characterised in that** the opposite ends of the lower transverse spindle (52) are received in a sixth pair of parallel and opposite slideways (82) which extend longitudinally in the interior of the passenger compartment (12), in particular along a floor (72) of the vehicle to permit stowage of the lower panel (22) in the interior of the passenger compartment (12) once the upper window (24) is retracted into the housing (56) of the lower panel (22).

11. A motor vehicle (10) according to claim 7 **characterised in that** the lower panel (22) of the rear door (14) is pivotably mounted with respect to the body (16) about a vertical axis (66) arranged along a lateral edge (68) of the panel (22).

12. A motor vehicle (10) according to any one of claims 8 to 11 **characterised in that** the pair of fifth slideways (54) comprises in its upper part (88) a recess (89) permitting rotational guidance of the transverse mounting spindle (50) of the upper window (24) in such a way as to permit the rear window (24) to be moved inwardly in a horizontal plane.

13. A motor vehicle (10) according to any one of the preceding claims **characterised in that** the second slideways (42) comprise direction-switching means of which an arm (86) extends vertically in line with the connection between the upper window (24) and the roof head (20) to permit the stowage casing (28) to be laid down towards the interior in a horizontal plane in line with the connection between the upper window (24) and the lower panel (22).

14. A motor vehicle (10) according to any one of the preceding claims **characterised in that** it comprises motor means for producing the sliding movement of the slats (26, 28, 34), the upper window (24) and the lower panel (22).

15. A motor vehicle (10) according to any one of the preceding claims **characterised in that** it comprises an additional fixed stowage casing which is arranged at the front of the roof (18) of the vehicle (10).

16. A motor vehicle according to any one of the preceding claims **characterised in that** the openable roof head extends over the entire length of the roof.

## Patentansprüche

1. Kraftfahrzeug (10), dessen Fahrgastzelle (12) begrenzt ist durch wenigstens eine Tür (14), welche transversal am hinteren Ende des Gehäuses (16) des Fahrzeugs (10) angeordnet ist, von dem Typ, in welchem die hintere Türe (14) eine untere Platte (22) umfasst, welche von einer obere Scheibe (24) überstiegen wird, und Mittel zur gelenkigen Befestigung der unteren Platte (22) im Verhältnis zum Gehäuse (16) des Fahrzeugs, welche das Öffnen der hinteren Türe (14) erlauben, von dem Typ, in welchem wenigstens ein Teil des Dachs (18) der Fahrgastzelle gebildet ist aus einem Zeltdach (20), welches sich im Wesentlichen horizontal erstreckt vor der oberen Scheibe (24) der hinteren Türe (14) und welches aus einer Vielzahl von transversalen Lamellen (26) gebildet ist, insbesondere im Verhältnis zueinander gelenkig befestigt, die geeignet sind, mitgezogen zu werden insbesondere durch eine vordere Lamelle (40), um longitudinal zu gleiten, insbesondere nach hinten und wenigstens teilweise die Fahrgastzelle (12) des Fahrzeugs (10) freizumachen und die dazu geeignet sind, aufgenommen zu werden insbesondere indem sie sich übereinander überlappen in einen Staukasten (28), der hinter dem Dach (18) in dessen Verlängerung angeordnet ist; **dadurch gekennzeichnet, dass** der Staukasten (28) einziehbar in einer Unterbringung (56) der untere Platte (22) der hinteren Türe (14) ist.

2. Kraftfahrzeug (10) gemäß Anspruch 1, **dadurch gekennzeichnet, dass** das Dach (18) ein Paar von ersten parallelen und gegenüberliegenden Gleitschienen (30) umfasst, die dazu bestimmt sind, transversale Zapfen der Lamellen (26) zu empfangen, und welche sich longitudinal in der Stärke des Dachs (18) erstrecken, um die Lamellen (26) zum Staukasten (28) zu führen in einer teilweise geöffneten Position der Fahrgastzelle (12).

3. Kraftfahrzeug (10) gemäß Anspruch 2, **dadurch gekennzeichnet, dass** das Dach (18) ein Paar von parallelen und gegenüberliegenden zweiten Gleitschienen (42) umfasst, die dazu bestimmt sind, die Zapfen (47) des Staukastens (28) aufzunehmen, und welche sich bis zur unteren Platte (22) der hinteren Türe (14) erstrecken, um den Staukasten (28) longitudinal und/oder vertikal zu führen zur unteren Platte (22), in einer Position der vollständigen Öffnung der Fahrgastzelle (12).

4. Kraftfahrzeug (10) gemäß einem der Ansprüche 2 oder 3, **dadurch gekennzeichnet, dass** das Innere (56) des Staukastens (28) ein Paar von internen, parallelen und gegenüberliegenden dritten Gleitschienen (36) umfasst, welche, in der Position der teilweisen Öffnung der Fahrgastzelle (12), die ersten Gleitschienen (30) für die Führung der Zapfen der Lamellen (26) im Inneren des Kastens (28) verlängern.

5. Kraftfahrzeug (10) gemäß einem der Ansprüche 3 oder 4, **dadurch gekennzeichnet, dass** das Innere der Unterbringung (52) der unteren Platte (22) ein Paar von internen, parallelen und gegenüberliegenden vierten Gleitschienen (60) umfasst, welche, wenn die hintere Türe (22) geschlossen ist, die zweiten Gleitschienen (42) für die Führung der Zapfen (47) des Staukastens (28) im Inneren der Unterbringung (56) der unteren Platte (22) verlängern.

6. Kraftfahrzeug (10) gemäß einem der vorhergehenden Ansprüche, **dadurch gekennzeichnet, dass** die obere Scheibe (22) longitudinal den Staukasten (28) in der teilweisen geöffneten Position der Fahrgastzelle (12) blockiert, und dadurch, dass ihr Rand (52), der der unteren Platte benachbart ist, gelenkig um eine transversale Achse (50) befestigt ist, um der Scheibe (24) zu erlauben, nach hinten zu klappen und den Staukasten (28) freizugeben für den Durchgang aus der teilweise geöffneten Position in die Position der vollständigen Öffnung der Fahrgastzelle (12).

7. Kraftfahrzeug (10) gemäß Anspruch 6, **dadurch gekennzeichnet, dass** die gegenüberliegenden Enden der transversalen Gelenkachse (50) der oberen Scheibe (24) in einem fünften Paar (54) von parallelen und gegenüberliegenden Gleitschienen aufgenommen ist, welche sich zum Inneren der Unterbringung (56) der unteren Platte (22) erstrecken, um der oberen Scheibe (24) zu erlauben, vertikal in die Unterbringung (56) der unteren Platte (22) zu gleiten.

8. Kraftfahrzeug (10) gemäß Anspruch 7, **dadurch gekennzeichnet, dass** die untere Platte (22) durch zwei obere Arme (62) getragen wird, welche im Wesentlichen vertikal sind, die in der Verlängerung des Gehäuses (16) des Fahrzeugs (10) angeordnet sind, beiderseits der oberen Scheibe (24), die an ihren oberen Enden durch transversale Drehpunkte (64) gelenkig befe stigt sind, und welche die zweiten Gleitschienen (42) umfassen.

9. Kraftfahrzeug (10) gemäß Anspruch 7, **dadurch gekennzeichnet, dass** die untere Platte (22) der hinteren Türe (14) gelenkig befestigt im Verhältnis zum Gehäuse (16) um eine untere transversale Achse (70) ist.

10. Kraftfahrzeug (10) gemäß Anspruch 9, **dadurch gekennzeichnet, dass** die gegenüberliegenden Enden der unteren transversalen Achse (70) in einem sechsten Paar von parallelen gegenüberliegenden Gleitschienen (82) aufgenommen sind, welche sich longitudinal im Inneren der Fahrgastzelle (12) erstrecken, insbesondere entlang eines Fußbodens (72) des Fahrzeugs, um, wenn die obere Scheibe (24) in die Unterbringung (56) der unteren Platte (22) eingezogen ist, die Verstauung der unteren Platte (22) im Inneren der Fahrgastzelle (12) zu erlauben.

11. Kraftfahrzeug (10) gemäß Anspruch 7, **dadurch gekennzeichnet, dass** die untere Platte (22) der hinteren Türe (14) gelenkig befestigt im Verhältnis zum Gehäuse (16) um eine vertikale Achse (66) ist, welche entlang eines seitlichen Rands (68) der Platte (22) angeordnet ist.

12. Kraftfahrzeug (10) gemäß einem der Ansprüche 8 bis 11, **dadurch gekennzeichnet, dass** das Paar der fünften Gleitschienen (54) in ihrem oberen Bereich (88) eine Abweichung (89) umfasst, welche die Führung in Rotation der transversalen Gelenkachse (50) der oberen Scheibe (24) erlaubt, derart, dass die hintere Scheibe (24) ins Innere in eine horizontale Ebene geklappt werden kann.

13. Kraftfahrzeug (10) gemäß einem der vorhergehenden Ansprüche, **dadurch gekennzeichnet, dass** die zweiten Gleitschienen (42) eine Weiche umfassen, von der ein Zweig (86) sich vertikal erstreckt senkrecht zur Verbindung zwischen der oberen Scheibe (24) und dem Zeltdach (20), um zu erlauben, den Staukasten (28) ins Innere niederzulegen in einer horizontalen Ebene senkrecht zur Verbindung zwischen der oberen Scheibe (24) und der unteren Platte (22).

14. , Kraftfahrzeug (10) gemäß einem der vorhergehenden Ansprüche, **dadurch gekennzeichnet, dass** es motorisierte Mittel zum Sicherstellen des Gleitens der Lamellen (26, 38, 40), der oberen Scheibe (24) und der unteren Platte (22) hat.

15. Kraftfahrzeug (10) gemäß einem der vorhergehenden Ansprüche, **dadurch gekennzeichnet, dass** es einen zusätzlichen festen Staukasten umfasst, der am vorderen Ende des Daches (18) des Fahrzeugs (10) angeordnet ist.

16. Kraftfahrzeug gemäß einem der vorhergehenden Ansprüche, **dadurch gekennzeichnet, dass** das Zeltdach sich über die gesamte Länge des Dachs erstreckt.
